# EUROPEAN PATENT APPLICATION

(11) **EP 4 369 169 A1**
(43) Date of publication of application: **15.05.2024**
(21) Application number: 22206387.7
(22) Date of filing: 09.11.2022
(51) Int. Cl.: G06F 3/06, G06N 3/0455, A61C 17/16, A46B 15/00, A61C 17/22

(54) **DATA COMPRESSION FOR ELECTRONIC PERSONAL HEALTH DEVICES USING AN ENCODER-DECODER ARTIFICIAL INTELLIGENCE MODEL**

(71) Applicant: Koninklijke Philips N.V., 5656 AG Eindhoven (NL)
(72) Inventor: SAEED, Aaqib, 5656AG Eindhoven (NL); VLUTTERS, Ruud, 5656AG Eindhoven (NL); DE BRUIJN, Frederik Jan, 5656AG Eindhoven (NL); VAN LEEUWEN, Marinus Bastiaan, 5656AG Eindhoven (NL); YUAN, Zhaorui, 5656AG Eindhoven (NL)
(74) Representative: Philips Intellectual Property & Standards

(57) **Abstract**

The invention provides a symmetric encoder-decoder AI model for data compression on low-resource personal care devices and devises technologies for user task-specific model extensions as well as on-device deployment and operation. A method for compressing data on an electronic personal health device, such as an electronic toothbrush or an electronic shaver, is provided, comprising capturing sensor data using a sensor, particularly an inertial measurement unit, of the personal health device; compressing the sensor data on the personal health device using an encoder model, particularly by generating one or more latent vectors in a latent space based at least in part on the captured sensor data, and storing the compressed sensor data on a non-volatile storage medium of the personal health device. The compressed data may be reconstructed using a decoder on a smartphone or a cloud computing environment.

## Description

### FIELD OF THE INVENTION

The present invention generally concerns the field of electronic personal health devices, and in particular electronic personal health devices intended for daily health and body care, such as e.g., electric shavers, electric toothbrushes, and the like. The invention may furthermore be advantageously used in other hygiene, beauty, household, self-tracking and/or medical application contexts. Just as another example, the invention may be employed in sleep trackers that may be worn during sleep, such as sleeping headbands. The invention generally relates to data acquisition, processing and analysis that is provided by or in context with use of these devices.

### BACKGROUND OF THE INVENTION

Digitalization is ubiquitous in today's world and fundamentally changes the way we live and communicate. One application domain of digitalization concerns personal care or health devices. For example, a user may use a smart toothbrush, a smart shaver or the like that may have one or several sensors to capture data for later analysis and/or further assist the user to improve both the functioning and result as well as the user experience when using the device. Such sensor data may comprise, by means of examples, data related to the user behavior while brushing his or her teeth, the frequency of use, or brushing durations for specific dental areas. Similar data may be acquired by a smart electronic shaver, respectively, or by self-tracking devices, such as smart headbands, e.g., sleeping headbands, or household devices, such as for example smart devices for care of clothing, such as smart steam irons.

In a known scenario, data may be captured by a sensor and transmitted on-the-fly to an external device for further processing. Such data could generally also be compressed for the purpose of transmission. In an example, the data could be transmitted using a wireless connection, e.g., using standards such as Bluetooth, Wifi, or the like. This arrangement, however, has the drawback that for good analysis results comprehensive data, usually huge amounts, need to be transmitted. Furthermore, the health care device needs to be connected to the data receiving device, such as a paired smartphone with a corresponding app or the like, at the time that the data is made available. If e.g., a paired smartphone is out of reach, or if the connection quality is bad, data may not be synchronized or even data loss may occur. This renders the whole technical setup unreliable, fragile and also error prone.

On the other hand, the possibilities to enable a full data processing, analysis and inference right at or in the personal health device itself are rather restricted. Both energy resources and computational resources are rather limited in common scenarios of small or even tiny handheld toothbrushes, shavers, and the like. This puts severe limits on data acquisition, on data processing, and successively on the results provided to the user as well as the user experience and the ease with which the device can be used in their everyday applications.

Efforts have been made to provide better rechargeable batteries to have more energy available before a device needs to be recharged again. However, devices may sometimes not be used for longer time periods or be disconnected from chargers completely for longer durations. Devices that "drain the battery" lead to unpleasant user experiences. Even if batteries can be even further improved, this cannot compensate for the enormous demand that would be necessary if those devices were equipped with data processing technology to enable the desired data processing, analysis and inference features in a direct brute-force manner. Smart and energy-saving solutions of data processing and analysis therefore seem to be necessary, and in all realistic scenarios without real alternative.

Further efforts have been made to increase the computational computing power significantly on these devices. However, this increases the need for energy even further, the devices become bigger, heavier and/or bulkier, leading to devices that are harder to use and lack of the pleasant user experience that is highly demanded by today's customers.

Additionally, hardware that is suitable for advanced and computationally intensive data processing can be rather expensive. Hence, in addition to the aforementioned disadvantages, the integration of such hardware that would directly enable advanced data processing and inference features in a local on-device manner into the personal health care devices that are designed for end users will have a strong impact on the devices' price. Customers, however, currently demand smart devices with advanced features, while expecting low energy consumption, long lifetime and reasonable cost of purchase and maintenance at the same time. There is hence also an additional economic dimension of the problem that the invention tries to solve.

It is therefore a problem underlying the invention to improve the aforementioned electronic personal health devices and the associated technology, and thereby overcome the above-mentioned disadvantages of the prior art at least in part.

### SUMMARY OF THE INVENTION

A solution to the problem has now been devised by the subject-matter of the independent claims. Accordingly, a method for compressing data on an electronic personal health device is provided as defined in independent claim 1. As two exemplary non-limiting applications, the electronic personal health device may be an electronic toothbrush or an electronic shaver. The method for compressing data can similarly be used by head bands such as sleep bands that can be worn during sleeping. These smart head bands may acquire and process data related to the sleep of a user. The method for compressing data may also be applied to (or provided by) other electric devices such as electric irons, particularly smart steam irons. The method may comprise capturing sensor data using a sensor of the personal health device. The sensor may be an inertial measurement unit. Such data could relate to certain time periods or usage sessions, and may hence constitute and/or be organized as e.g., brushing segments (example for the case of a toothbrush). The method may comprise compressing the sensor data on the personal health device using an encoder model. This may be done particularly by generating one or more latent vectors in a latent space based at least in part on captured sensor data. The method may also comprise storing the compressed sensor data on a storage medium of the personal health device. The storage medium may be non-volatile.

The data that is compressed may be related to one or more specific tasks and/or user sessions of the electronic personal health device. The data that is stored on the personal health device may hence comprise data related to one or more specific tasks and/or user sessions of the electronic personal health device. This could, as one example, relate to a type of localization and/or location tracking. For example, this could relate to the question where, for example in a body region such as a face of the user of an electronic shaver, has the shaver and/or the razor of the shaver been, and e.g., for how long. As a non-limiting example, intensity profiles could be captured as data. Some of these tasks may involve the usage of one or more inertial measurement units. In another example, the data could relate to where the bristle or the head of an electronic toothbrush has been, e.g., also which part of the teeth of a user has been cleaned, and for how long. As a non-limiting example, intensity profiles could be captured as data by the toothbrush.

Compression may comprise any sort of encoding. Preferably, this encoding reduces the size of the data by a compression factor. The compression factor may however also include the case where it is equal to one. Hence, also an encoding that does not or not necessarily reduce the data or any data in size may be regarded as a compression in the sense of the invention. Preferably, however, compressions are employed that reduce the data size and/or amount and/or decrease its entropy.

The compression method may particularly involve storing the compressed data on the electronic personal health device itself. This may be achieved using any sort of volatile or non-volatile storage medium arranged on, in or at the electronic personal health device. Preferably, this is a non-volatile memory which allows for longer-time storage with low energy consumption. Due to the compression, only low amounts of space are required. Furthermore, this secures the data against unauthorized exploitation of the data such as unauthorized data readouts and/or data privacy violations, as arbitrary information of the signal that is irrelevant for the model is being removed, it will be impossible or very difficult for a third party to reconstruct the original information from the stored data). The reduction of the amount of space may be very crucial. The low energy consumption on the electronic personal health device may be very crucial as well. These aspects are crucial because typically both energy and storage capacity resources are fairly limited on electronic personal health devices such as low energy electronic personal health devices. By compressing and storing the compressed data on the personal health device, the invention uses the resources of the personal health device most efficiently. Precious data that would otherwise have to be discarded to save resources can be stored and secured for future use, opening up enlarged possibilities for later data processing and analysis. By relying on storing on the electronic personal health device itself instead of relying on a pure direct on-the-fly, e.g., also wireless, transmission of data, particularly without leaving a local copy on a non-volatile memory behind on the personal health device itself, the data acquisition furthermore becomes less error-prone and the device more independent from (less dependent on) external circumstances, for example specific conditions during use and/or availabilities of connections. The data transmission or synchronization with an external device may be performed occasionally, for instance 2 or 3 times per week, or whenever the opportunity arises, and may due to the compression itself be performed in a very resource-saving manner. For those reasons, the combination of efficient encoder model compression, preferably using a machine learning technique and model, and on-the-device storage, preferably on a non-volatile local storage medium, gives rise to great advantages that are absent in the prior art.

The encoder model that performs the compression may generally be any suitable machine learning technique, or machine learning model, such as for example one or more artificial neural networks. Preferred embodiments of both encoder (and related decoder) model(s) as well as training, further preparation and deployment techniques of these models will be discussed at a later stage in more detail. A corresponding decoder may be trained in an analogous or similar manner. The decoder may be employed externally. The decoder could be deployed in a separate device, such as an app on a mobile user device such as a smartphone. The decoder could also be operated on one or several computers or servers, such as a computing cloud. Combinations of these features are possible. For example, a decoder could be deployed locally on a smartphone, and another decoder could operate in a computing cloud for particularly intensive tasks and/or for higher accuracy. In one non-limiting example, a local model on a smartphone could be a trimmed, quantized and/or pruned version or a student model version of a more sophisticated model operating in the cloud. Similarly, in a non-limiting example, a local model on the personal health device could be a trimmed, quantized and/or pruned version or a student model version of a more sophisticated model operating in the cloud and/or a model operating on a smartphone. In one example, three versions of increasing complexity of a machine learning model may be employed and/or have been deployed: a tiny model on the personal health device, a larger model on an external mobile device such as a smartphone, an extended model available for computations via a computing cloud. The encoder and decoder may be trained as a symmetric model. A typical example for applying the invention will be discussed at a later stage for illustration, regarding a smart toothbrush, with respect to the figures.

To save resources and using them in the most favorable way, a combined model may be used for the compression and an inference for a certain task at hand. This may hence happen simultaneously using the combined model. Such a task at hand could e.g., be localization. The task could also relate to e.g., the prediction of a certain behavior or a brushing segment. The task specific model output may also be compressed. This could happen inside or outside the combined model, using the same or different compression techniques. For example, a brushing segment predicted as a result of a task, hence as a task-specific output, may hence also be compressed. The invention may hence support task-specific model output compression and input (e.g., raw sensory data) compression as different modes of compression, isolated and/or combined. Post-performance and/or delay/scheduled compression may be supported by the invention. For example, a compression may only take place after a user has brushed his or her teeth. This may be dependent on the presence of a charger/power status of an internal battery and/or scheduling. This ensures that the health device deals with precious battery power in the most cautious way.

Seen from a different perspective, the encoder model for compression may form part of a comprehensive task-specific machine learning model. As a result, the compression is adapted and therefore optimal to the task at hand. Unlike in the prior art, where general compression is typically designed independent of the machine learning model and therefore by definition unaware of the information in the raw data that is relevant for the machine learning model, in the above aspect of the invention the compression is part of the machine learning model and therefore is able to remove data from the raw signal that is irrelevant for the machine learning algorithm. Therefore, risk that relevant information is removed during compression is minimized, and potentially higher levels of compression are made possible.

The electronic personal health device may be a low-resource device. Therefore, it is advantageous to save energy and the limited computational resources and capacities, and to make beneficial use of any of the technology disclosed herein that can help to provide advanced data processing and user features under constraints of limited resources.

The storage medium of the personal health device may comprise a flash memory and/or an electrically erasable programmable read-only memory, EEPROM. The storage medium of the personal health device may also be integrated in a system-on-chip, SoC, integrated circuit. These solutions are suitable for the technology at hand, since they allow for non-volatile data storage, even when resources are limited or have to be kept low.

The storage medium of the personal health device may have a storage capacity of or in the range of approximately 512 kB. It is hence beneficial to use a compression, particularly one that is well-suited and adapted to the device and the tasks at hand.

A typical toothbrush user would use his toothbrush (at least) twice per day, in sessions of 2 minutes each. This typically generates around roughly 100 kilobytes of raw data per day, depending on the specifics of the technology employed. With aspects of the invention, it is possible to store significantly more than the last 5 days of brushing sessions (approximate calculation, prior art), on the health device itself. Statistics on user behaviour may hence be drawn up with respect to relevant time frames beyond short periods merely comprising a few days.

The method may comprise transmitting, particularly wirelessly, compressed sensor data to an external device to enable data processing outside the personal health device. Optionally, the external device may comprise an electronic user device, particularly a mobile phone, or a data processing device, particularly a server, preferably arranged in a cloud computing environment. External data processing can be performed in a rather powerful and both intensive and extensive manner. High computational resources are available. Due to the compression, less data has to be transferred via the wireless interface, saving energy and hence prolonging battery lifetime of the device battery.

The encoder model may form part of a task-specific machine-learning model related to a function performed by the personal health device. To that end, the task-specific model may comprise at least one additional task-specific layer. In a non-limiting example, this/these additional layer(s) could be located on a decoder-output side of a symmetric encoder-decoder model.

The mentioned combination of task and/or models into a single entity, respectively, provides several significant advantages. The model then provides the compression and a task-specific inference simultaneously and in an interdependent manner. Furthermore, the training may be done in an interdependent manner.

The encoder model may comprise an encoder part providing a latent vector. Such a latent vector may be smaller than the original data that was fed in (e.g., raw sensor data, e.g., from the inertial measurement unit, IMU). The encoder model itself may also already provide a decoder part. In that sense, the encoder model may provide a symmetric encoder-decoder topology. The output of the decoder part may be used for task-specific inference. For example, this output could be used as input for one or more additional task-specific layers. These could form a fully convolutional model. These may be used to make predictions or provide inference for the task at hand. In the case of a toothbrush, the task at hand could be localization tracking. The model may be LSTM-based. The extended symmetric encoder-decoder model may be used to solve several tasks effectively simultaneously, e.g., inference and data compression. The storage of the compressed data, e.g., latent vectors, ensures that data and events can be reconstructed later. By feeding the compressed data into respective decoders, also the task-specific inference may later be properly reproduced and reconstructed, without any additional errors having been induced.

Therefore, the encoder-decoder topology with additional task-specific layers, particularly layers located on the decoder side, combines several advantages for the application to low-resource personal health devices discussed herein. Inference and compression are performed at low cost, simultaneously and in a reproducible fashion. The data may be fed in and the output may be read out at regular or irregular timesteps, at properly selected recurrences and/or frequencies, as may be appropriate for the respective task and/or nature of the personal health device.

The encoder model may hence allow for simultaneous inference related to the function performed by the personal health device, such as oral location tracking, and compression in an on-the-fly fashion. Depending on resource availability, compression and/or inference tasks may be performed immediately or later, e.g., after a user has finished brushing and/or the device is again connected to a power supply.

Data storage space availability may be very limited on personal health devices.

Representation learning techniques may harness the data effectively. They may furthermore be paired with multiple other methods to improve generalization. To teach the model to solve both tasks (compression and use-related task-at-hand) simultaneously in an effective manner, a reconstruction-based objective may be employed, optionally supplemented with a task-specific loss function. For example, these may comprise employment one or more of: cross-entropy (CE) loss function, categorical CE and/or sparse CE loss function. This may be combined with self-supervised learning approaches to also effectively make use of unlabeled datasets. To that end, one or more pretext tasks may be devised and successively employed during the training.

The encoder model deployed onto such a device may hence have been compressed using one or more approaches comprising: quantization, pruning and/or knowledge distillation, particularly employing a student model to mimic the behaviour of a teacher model to a predetermined accuracy.

Knowledge distillation may comprise training a teacher encoder model using a representation learning technique, particularly employing an LSTM artificial neural network. It may comprise providing a student encoder model that is smaller than the teacher encoder model.

It may comprise training the student encoder model to mimic the behaviour of the teacher encoder model, particularly up to a certain predetermined accuracy. It may also comprise supplying the trained student encoder model for use applications and/or for deploying the trained student encoder model on an electronic personal health device, such as an electronic toothbrush or an electronic shaver. By means of any of these features mentioned, the model may become an efficient model to properly mimic the underlying parent model's behavior, but to consume less space and require less computational resources. The model will hence be more suitable for deployment and operation on the low-resource personal health device. The parent model may be subject to quantization and/or pruning, particularly before the student model is devised and/or trained. The student model itself may be subject to quantization and/or pruning to further optimize for limited resource consumption while maintaining feasible results. Throughout any of these steps, mean-squared error may be employed, or any other technique to properly assess the validity, quality and/or the error of the model. Throughout training, a cross-entropy loss function may be employed.

The encoder model itself may be compressed to make it smaller for device deployment. This can be achieved by machine learning techniques, by conventional techniques and/or combinations thereof.

The encoder model may be based at least in part on a convolutional neural network, CNN, particularly a U-Net, more particularly a one-dimensional U-Net. In one example, the encoder model is based at least in part on a recurrent neural network, RNN, particularly a long short-term memory, LSTM, neural network. These have proven very successful in practice and having the desired characteristics needed.

The data that is stored and/or transmitted to an external device, for further processing by that device and/or in a computing cloud, may be selected using scheduling and/or random selection. With a diverse selection of different health device usage sessions, and observation over longer time periods, better statistics and user advice can be created. Schemes of thinning out / temporal data dilution may be employed. Specific triggers and/or criteria may be employed to search for and select data with specific characteristics. For example, such triggers and/or selection could be driven by the task-specific model (e.g., real-time localization model), e.g., the task-specific layers of the encoder model. The latter example computationally benefits from organic integration of the task-specific layers into the encoder model itself.

The compression method may comprise storing at least part of the sensor data as raw data on the personal health device in accordance with a predefined criterion such as a data amount, a usage time and/or a predefined number of usage sessions of the personal health device. For example, the last N sessions of usage of the personal health device (or any comparable properly chosen unit of such type) may be stored as additional raw data.

The data may later be equally transmitted for external processing to a processing device and/or a computing cloud.

The compression model may be extended by employment of conditioning approaches. For example, a model may conditionally generate and/or reconstruct IMU data, particularly filtered IMU data, from compressed data such as latent vectors.

Uncompressed data (for example, the last N sessions mentioned) may be encoded and fed alongside of latent vectors into a decoder. The encoder here can be a "large encoder". The "large encoder" may be employed outside of the low-resource personal health device. The (large) encoder may hence be, for example, a corresponding encoder model, before trimming, pruning and/or other similar techniques. The encoder may also be a teacher model that is underlying a student model that has been deployed on the personal health device. The teacher model may hence be larger, but it can add back precision that had been impacted by any model-compression, trimming, pruning, quantization and/or knowledge distillation process.

By concatenating sessions, where raw data is available and that have successively been encoded by an encoder (particularly by a "large" encoder), to compressed latent vectors originating in compressed form from the personal health device, precision in data reconstruction is enhanced for all data successively decoded.

Such a strategy can result in more refined reconstruction as it will be able to consider personal usage characteristics of the device.

During training, privacy sensitive information may be removed from encoded data. This can be achieved, by means of example, by employment of variants of stochastic gradient descent optimizers that incorporate differential privacy. One may also compress the output of the task-specific model (e.g., localization model), especially the most probable segment index. These integer values (for every timestep) turn out to be very repetitive in most applications, so these can be very efficiently compressed using run-length encoding. Alternatively, more advanced compression scheme like Heatshrink may be used.

The present invention also provides a computer program, or a computer-readable medium storing a computer program. The computer program may comprise instructions which, when the program is executed on a computer and/or a computer network, cause the computer and/or the computer network to carry out any of the methods disclosed herein.

The present invention also provides a machine-learning model data structure. The data structure may embody a machine-learning model, in particular a machine-learning model, for compressing/encoding and/or decoding. The model may be trained, or additionally prepared, using any of the methods disclosed herein.

### BRIEF DESCRIPTION OF THE DRAWINGS

The disclosure may be better understood by reference to the following drawings:
Fig. 1: An illustration of a smart electronic toothbrush with a symmetric encoder and (external) decoder, in accordance with embodiments of the invention, as well as model deployment.
Fig. 2: An illustration of certain aspects related to the model training and deployment in accordance with embodiments of the invention.
Fig. 3: A schematic illustration of a u-net model architecture (1-dimensional) for 12/16 segment localization in accordance with embodiments of the invention.
Fig. 4: An illustration of a conditioning mechanism on last N device usage sessions using additionally raw data for refined reconstruction of compressed data, in accordance with embodiments of the invention.

### DETAILED DESCRIPTION OF THE EMBODIMENTS

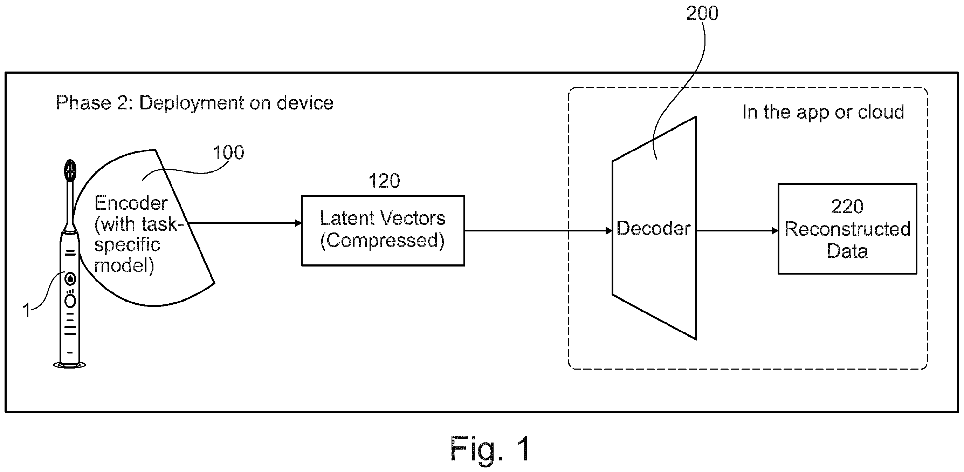

Fig. 1 shows a setup of a personal health device (here: electronic toothbrush) 1 according to an embodiment of the present invention. An encoder 100 is employed at the toothbrush 1 to compress data. The model underlying the encoder 100 may be a combined encoder-decoder model. It could be a CNN such as a 1-dimensional U-net architecture. The model may produce latent vectors 120 as a compressed output 120. These latent vectors may be saved (stored) on the toothbrush itself. For example, they can be saved (stored) on an EEPROM or a flash memory that is integrated into the toothbrush. In one example, the memory only has 512 kb of space. The model itself may be saved on the memory as well, and may be compressed to save space.

The model may be additionally adapted to solve specific tasks such as teeth localization, preferably simultaneously with the compression. This saves resources and facilities the process while keeping required data structures small. Latent vectors 120 are then produced by the model that simultaneously solves a user task. This can be accomplished by adding one or more additional task-specific layers to the model. In an extension, several tasks (e.g., two or more) can be predicted or inferred simultaneously, in addition to the data compression.

The model may be trained to improve its results. It may also have been obtained from a larger and/or more complex model. The latter could be a teacher model that has been trained and solves the desired tasks. For deployment on the toothbrush 1, the model for the encoder 100 may be a student model that tries to mimic the behavior of an underlying teacher model. This saves space and computational resources. Additionally, further techniques such as pruning, trimming, quantization etc. may have been employed for further reduction of space consumption.

A decoder 200 may be located in a smartphone (E.g., implemented via a smartphone application) or in a computing cloud comprising one or more server computers. Latent vectors 120 may be transferred from the toothbrush to the external decoder 200. The decoder 200 can reconstruct data from latent vectors. The reconstructed data 220 may correspond to filtered data, that mimics the raw data, up to filtering effects. The reconstructed data may be analyzed by further processing steps.

The transmission of latent vectors 120 to the app or cloud may occur regularly, according to a schedule and/or when the opportunity arises, e.g., the presence of the smartphone in the vicinity of the toothbrush.

The encoder and decoder are preferably arranged and/or trained as symmetric parts of a symmetric encoder-decoder model

The decoder 200 may however comprise a larger model when compared to the encoder model 100 on the toothbrush 1. For example, reduction techniques such as knowledge distillation, trimming, pruning, quantization, etc. may have been applied, at least in part, to the model at the encoder 100 on the toothbrush 1, whereas these techniques are absent, at least in part, with respect to the decoder 200 in the app or the cloud. This is possible, since in the app or the cloud, both space and computational resources are more readily available.

In an alternative embodiment, a toothbrush charger is equipped with a decoder 200 to reconstruct data 220. The transmission of latent vectors may occur for example using wireless near-file communication. The charger may be equipped with a SIM module for internet access, enabling data processing in the computing cloud.

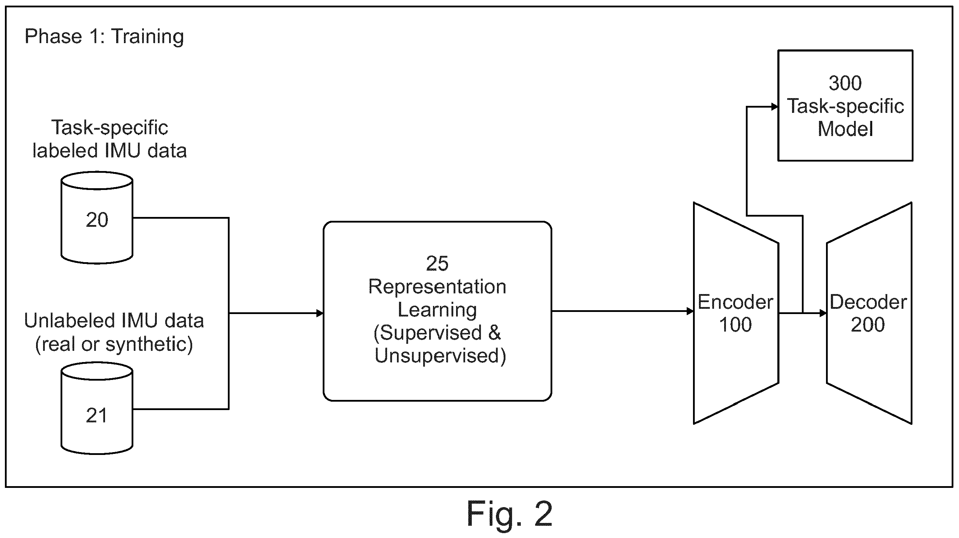

Fig. 2 shows a scenario for training of an encoder model. This can be a symmetric encoder-decoder model. The model may also comprise or form part of a task-specific model 300. The task-specific model may comprise and/or be implemented via one or more task-specific layers. These layers may serve to provide a prediction on a desired task of interest.

For the training of the model, which may comprise encoder 100, decoder 200 and task-specific model 300, representation learning techniques 25 may be employed. Representation learning 25 may comprise both supervised and/or unsupervised learning techniques.

The model may be trained according to Fig. 2 and may successively be deployed (and used) as shown and discussed with respect to Fig. 1.

For the training, one can use labelled IMU data 20 for a certain task. The task could, for example in oral health care, be localization. Alternative or supplementary data may be provided by unlabeled IMU training data 21. The unlabeled IMU data 21 may comprise real data and/or synthetic data.

Representation learning techniques 25 may, as non-limiting examples, comprise reconstruction-based objectives with task-specific loss functions, for example cross-entropy, CE.

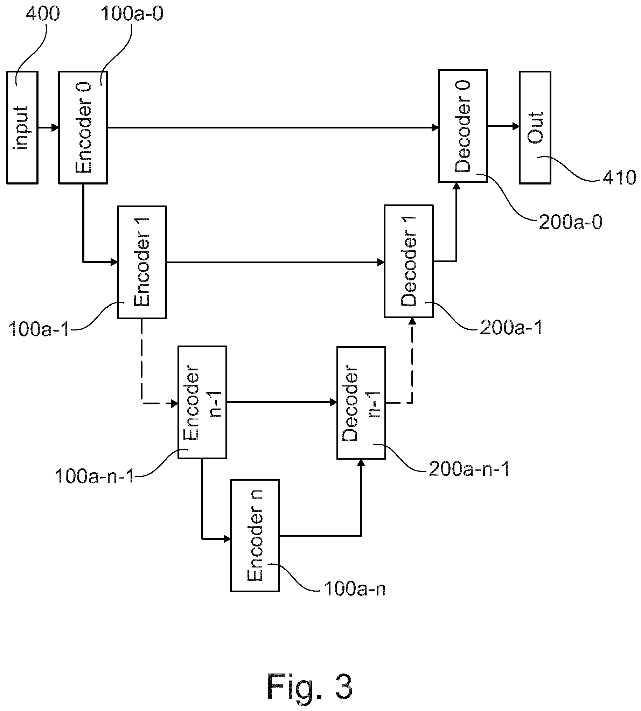

Fig. 3 shows an exemplary model architecture. The model may be a 1-dimensional U-net architecture. The architecture may comprise a symmetrically designed encoder-decoder model architecture.

Input data 400 may comprise raw data. Raw data may originate from a sensor on the toothbrush 1, such as an inertial measurement unit IMU. Successively convoluted layers may be formed by encoders 100a-0 through 100a-n. n may be an integer number appropriately (statically or dynamically) chosen. The encoders 100a-0 through 100a-n may output a latent vector representation. The representation could be n-dimensional. The layers may furthermore be equipped with corresponding decoders 200a-0 through 200a-n-1. Their output may be used within additional task-specific layers for a solution, an inference or a prediction related to a task.

To that end, a task may be solved by the network model in addition to the compression to latent vectors. The task could, in a non-limiting example of oral health care, relate to 12/16 segment localization.

Alternatively (or additionally) to the models shown and discussed here, an RNN may be employed, particularly a LSTM.

The proposed model choices are particularly useful for the application at hand due to their simplicity and their independence from expansive availability of resources.

The model may hence be trained to compress and/or solve the task, preferably both. Afterwards it could be pruned, quantized or become subject to a similar complexity reduction and/or compression technique. It may also serve as a teacher model for the generation of a student model. A final model, e.g., pruned, quantized and/or student model, may be deployed on a toothbrush 1 for operation.

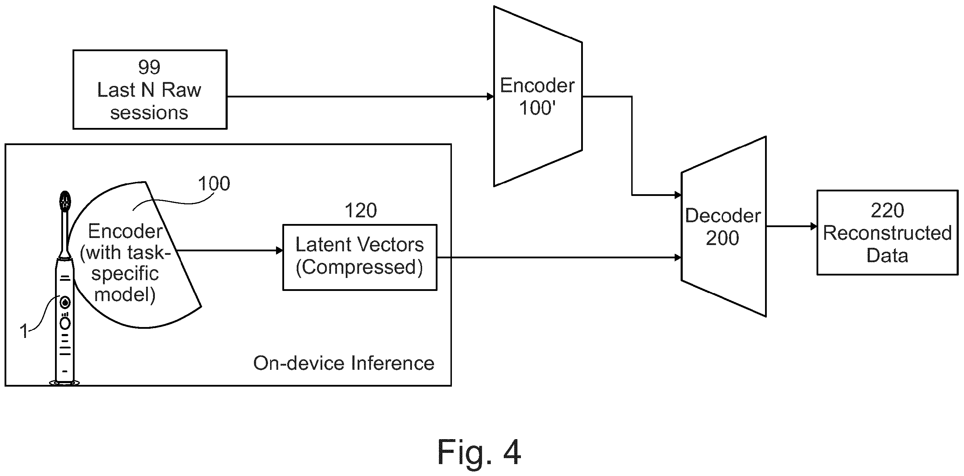

Fig. 4 shows an extended setup with some additional features that may be advantageously employed in the context of embodiments of the present invention. Specifically, a conditioning mechanism on last N device usage sessions 99 is proposed, using additionally raw data for refined reconstruction of compressed data.

The toothbrush 1 is equipped with an encoder 100 that has been deployed on the device. The encoder 100 may comprise an encoder model that may form part of a task-specific machine learning model. Apart from solving the task, when using the network model of encoder 100, compressed data 120 is produced in form of latent vectors 120. These latent vectors can be stored and kept on the toothbrush 1 for later use and/or data transferal. Due to the good compression achieved, the storage space available on the toothbrush 1 is used efficiently and the stored data may go back long in time.

Additionally, according to a certain criterion, for example, raw data may be stored on the toothbrush as raw data 99. In a non-limiting example, this data 99 may be transmitted to an app or to a computing cloud together with compressed data 120, and be advantageously used. An encoder 100' may encode this data on a smartphone's processor or on the cloud servers. This encoder may be a "large" encoder 100' (as opposed to the "small" encoder 100 where resources such as space are very crucial). The compressed data generated by encoder 100' may hence be precision-augmented as compared to the data by on-device encoder 100. This is due to the possibility that the large encoder model may be neither pruned, neither trimmed, nor have been knowledge-distilled, since encoder 100' has more computational resources available at cheap cost.

The data encoded by encoder 100' may be concatenated to latent vectors 120 obtained from the personal health device 1. The concatenated data may be decoded using decoder 200 (e.g. in the app or the cloud) to obtain reconstructed data 220. The decoder 200 may therein benefit from learning and training based on the additional raw data 99 that has been encoded by encoder 100'. Due to the presence of the additional data by encoder 100' the decoding process is improved, not only for the sessions 99 (or corresponding ones), but also for other latent vectors obtained from personal health device 1. This strategy hence results in a more refined reconstruction of reconstructed data 220. The raw data 99 may also include the task-specific output. For example, one may choose to condition the model on output of brushing segments: The task specific output in the form of brushing segments may then be passed through a linear embedding layer and be fed as concatenated vectors into the decoder. This enables to further consider personal usage characteristics of the device.

The embodiment(s) discussed in the figure descriptions may be combined with any of the preferred additional features for the invention disclosed herein.

Although some aspects have been described in the context of a device, it is clear that these aspects also represent a description of the corresponding process, where a block or device corresponds to a process step or a function of a process step. Similarly, aspects described in the context of a process step also constitute a description of a corresponding block or element or feature of a corresponding device. Also, features disclosed in the context of a certain process, device or model may be used in a corresponding other process, device or model. For example, features of the encoder model may be used analogously in a corresponding decoder model, and vice versa.

Embodiments of the invention may be implemented in a computer system. The computer system may be a local computing device (e.g., personal computer, laptop, tablet computer, or cell phone) having one or more processors and one or more storage devices, or may be a distributed computing system (e.g., a cloud computing system having one or more processors or one or more storage devices distributed at various locations, for example, at a local client and/or one or more remote server farms and/or data centers). The computer system may comprise any circuitry or combination of circuitry. In one embodiment, the computer system may comprise one or more processors, which may be of any type. As used herein, processor may mean any type of computing circuit, such as, but not limited to, a microprocessor, a microcontroller, a complex instruction set microprocessor (CISC), a reduced instruction set microprocessor (RISC), a very long instruction word (VLIW; VLIW) microprocessor, a graphics processor, a digital signal processor (DSP), a multi-core processor, a field-programmable gate array (FPGA), or any other type of processor or processing circuit. Other types of circuitry that may be included in the computer system may include a custom-built circuit, an application-specific integrated circuit (ASIC), or the like, such as one or more circuits (e.g., a communications circuit) for use in wireless devices such as cellular phones, tablet computers, laptop computers, two-way radios, and similar electronic systems. The computer system may include one or more storage devices, which may include one or more storage elements suitable for the particular application, such as main memory in the form of random access memory (RAM), one or more hard drives, and/or one or more drives that handle removable media, such as CDs, flash memory cards, DVDs, and the like. The computer system may also include a display device, one or more speakers, and a keyboard and/or controller, which may include a mouse, trackball, touch screen, voice recognition device, or any other device that allows a system user to input information to and receive information from the computer system.

Some or all of the method steps may be performed by (or using) a hardware device, such as may be a processor, a microprocessor, a programmable computer, or an electronic circuit. In some embodiments, one or more of the key method steps may be performed by such a device.

Depending on certain implementation requirements, embodiments of the invention may be implemented in hardware or software. The implementation may be performed using a non-volatile storage medium such as a digital storage medium, such as a floppy disk, a DVD, a Blu-Ray, a CD, a ROM, a PROM and EPROM, an EEPROM, or a FLASH memory, on which electronically readable control signals are stored that interact (or are capable of interacting) with a programmable computer system such that the respective process is performed. Therefore, the digital storage medium may be computer readable.

Some embodiments according to the invention include a data carrier having electronically readable control signals that can interact with a programmable computer system so as to perform any of the methods described herein.

In general, embodiments of the present invention may be implemented as a computer program product having program code, the program code being effective to perform any of the methods when the computer program product is running on a computer. For example, the program code may be stored on a machine-readable medium.

Further embodiments include the computer program for performing any of the methods described herein stored on a machine-readable medium.

In other words, an example embodiment of the present invention therefore includes a computer program having program code for performing any of the methods described herein when the computer program is running on a computer.

Thus, another embodiment of the present invention is a storage medium (or a digital storage medium or a computer-readable medium) comprising a computer program stored thereon for performing any of the methods described herein when executed by a processor. The data carrier, digital storage medium, or recorded medium is generally tangible and/or non-transitory. Another embodiment of the present invention is an apparatus as described herein comprising a processor and the storage medium.

Thus, another embodiment of the invention is a data stream or signal sequence representing the computer program for performing any of the methods described herein. For example, the data stream or signal sequence may be configured to be transmitted over a data communication link, such as over the Internet.

Another example embodiment comprises a processing means, for example, a computer or programmable logic device, configured or adapted to perform any of the methods described herein.

A further example embodiment comprises a computer having installed thereon the computer program for performing any of the methods described herein.

Another embodiment according to the invention comprises a device or system configured to transmit (for example, electronically or optically) a computer program for performing any of the methods described herein to a receiver. The receiver may be, for example, a computer, a mobile device, a storage device, or the like. The device or system may include, for example, a file server for transmitting the computer program to the receiver.

In some embodiments, a programmable logic device (e.g., a field programmable gate array, FPGA) may be used to perform some or all of the functionalities of the methods described herein. In some embodiments, a field programmable gate array may cooperate with a microprocessor to perform any of the procedures described herein. In general, the methods are preferably performed by any hardware device.

Embodiments may be based on using an artificial intelligence, particularly a machine learning model or machine learning algorithm. Machine learning may refer to algorithms and statistical models that computer systems can use to perform a particular task without using explicit instructions, rather than relying on models and inference. For example, machine learning may use, instead of a rulebased transformation of data, a transformation of data that can be inferred from an analysis of history and/or training data. For example, the content of images may be analyzed using a machine learning model or using a machine learning algorithm. In order for the machine learning model to analyze the content of an image, the machine learning model may be trained using training images as input and training content information as output. By training the machine learning model with a large number of training images and/or training sequences (e.g., words or sentences) and associated training content information (e.g., labels or annotations), the machine learning model "learns" to recognize the content of the images so that the content of images not included in the training data can be recognized using the machine learning model. The same principle can be used for other types of sensor data as well: By training a machine learning model using training sensor data and a desired output, the machine learning model "learns" a transformation between the sensor data and the output, which can be used to provide an output based on non-training sensor data provided to the machine learning model. The provided data (e.g., sensor data, metadata, and/or image data) may be preprocessed to obtain a feature vector that is used as input to the machine learning model.

Machine learning models can be trained using training input data. The above examples use a training method called supervised learning. In supervised learning, the machine learning model is trained using a plurality of training samples, where each sample may include a plurality of input data values and a plurality of desired output values, i.e., each training sample is associated with a desired output value. By specifying both training samples and desired output values, the machine learning model "learns" which output value to provide based on an input sample that is similar to the samples provided during training. In addition to supervised learning, semi-supervised learning can also be used. In Semi-Supervised Learning, some of the training samples lack a desired output value. Supervised learning can be based on a supervised learning algorithm (e.g., a classification algorithm, a regression algorithm, or a similarity learning algorithm). Classification algorithms can be used when the outputs are restricted to a limited set of values (categorical variables), i.e., the input is classified as one of the limited set of values. Regression algorithms can be used when the outputs exhibit some numerical value (within a range). Similarity learning algorithms can be similar to both classification and regression algorithms, but are based on learning from examples using a similarity function that measures how similar or related two objects are. In addition to supervised learning or semi-supervised learning, unsupervised learning can be used to train the machine learning model. In Unsupervised Learning, (only) input data may be provided and an Unsupervised Learning algorithm may be used to find structure in the input data (e.g., by grouping or clustering the input data, finding commonalities in the data). Clustering is the assignment of input data comprising a plurality of input values into subsets (clusters) such that input values within the same cluster are similar according to one or more (predefined) similarity criteria, while they are dissimilar to input values comprised in other clusters.

Reinforcement learning is a third group of machine learning algorithms. In other words, reinforcement learning can be used to train the machine learning model. In reinforcement learning, one or more software actors (called "software agents") are trained to take actions in an environment. Based on the actions taken, a reward is calculated. Reinforcement learning is based on training the one or more software agents to select actions such that the cumulative reward is increased, resulting in software agents that become better at the task they are given (as evidenced by increasing rewards).

Further, some techniques can be applied to some of the machine learning algorithms. For example, feature learning can be used. In other words, the machine learning model may be trained at least in part using feature learning, and/or the machine learning algorithm may include a feature learning component. Feature learning algorithms, called representation learning algorithms, may preserve the information in their input but transform it in such a way that it becomes useful, often as a pre-processing stage before performing classification or prediction. Feature learning can be based on principal component analysis or cluster analysis, for example.

In some examples, anomaly detection (i.e., outlier detection) may be used, which aims to provide identification of input values that raise suspicion because they differ significantly from the majority of input and training data. In other words, the machine learning model may be trained at least in part using anomaly detection, and/or the machine learning algorithm may include an anomaly detection component.

In some examples, the machine learning algorithm may use a decision tree as a predictive model. In other words, the machine learning model may be based on a decision tree. In a decision tree, observations about an item (e.g., a set of input values) can be represented by the branches of the decision tree, and an output value corresponding to the item can be represented by the leaves of the decision tree. Decision trees can support both discrete values and continuous values as output values. When discrete values are used, the decision tree can be called a classification tree; when continuous values are used, the decision tree can be called a regression tree.

Association rules are another technique that can be used in machine learning algorithms. In other words, the machine learning model can be based on one or more association rules. Association rules are created by identifying relationships between variables given large amounts of data. The machine learning algorithm may identify and/or use one or more ratio rules that represent knowledge that is inferred from the data. The rules may be used, for example, to store, manipulate, or apply the knowledge.

Machine learning algorithms are typically based on a machine learning model. In other words, the term "machine learning algorithm" may refer to a set of instructions that can be used to create, train, or use a machine learning model. The term "machine learning model" may refer to a data structure and/or set of rules representing the learned knowledge (e.g., based on training performed by the machine learning algorithm). In embodiments, the use of a machine learning algorithm may imply the use of an underlying machine learning model (or a plurality of underlying machine learning models). The use of a machine learning model may imply that the machine learning model and/or the data structure/set of rules that is/are the machine learning model is trained by a machine learning algorithm.

For example, the machine learning model may be an artificial neural network (ANN; artificial neural network). ANNs are systems inspired by biological neural networks, such as those found in a retina or brain. ANNs include a plurality of interconnected nodes and a plurality of connections, called edges, between nodes. There are typically three types of nodes, input nodes that receive input values, hidden nodes that are connected (only) to other nodes, and output nodes that provide output values. Each node can represent an artificial neuron. Each edge can send information, from one node to another. The output of a node can be defined as a (nonlinear) function of its inputs (e.g., the sum of its inputs). The inputs of a node may be used in the function based on a "weight" of the edge or node providing the input. The weight of nodes and/or of edges can be adjusted in the learning process. In other words, training an artificial neural network may include adjusting the weights of the nodes and/or edges of the artificial neural network, i.e., to achieve a desired output for a given input.

Alternatively, the machine learning model may be a support vector machine, a random forest model, or a gradient boosting model. Support Vector Machines (i.e., support vector networks) are supervised learning models with associated learning algorithms that can be used to analyze data (e.g., in a classification or regression analysis). Support Vector Machines can be trained by providing an input with a plurality of training input values belonging to one of two categories. The Support Vector Machine can be trained to assign a new input value to one of the two categories. Alternatively, the machine learning model may be a Bayesian network, which is a probabilistic directed acyclic graphical model. A Bayesian network may represent a set of random variables and their conditional dependencies using a directed acyclic graph. Alternatively, the machine learning model can be based on a genetic algorithm, which is a search algorithm and heuristic technique that mimics the process of natural selection.

## Claims

1. A method for compressing data on an electronic personal health device, such as an electronic toothbrush or an electronic shaver, comprising the following steps:
capturing sensor data using a sensor, particularly an inertial measurement unit, of the personal health device;
compressing the sensor data on the personal health device using an encoder model, particularly by generating one or more latent vectors in a latent space based at least in part on the captured sensor data, and
storing the compressed sensor data on a non-volatile storage medium of the personal health device.

2. The method of claim 1, wherein:
the electronic personal health device is a low-resource device; and/or
the storage medium of the personal health device is a flash memory and/or an electrically erasable programmable read-only memory, EEPROM; and/or
the storage medium of the personal health device is integrated in a system-on-chip, SoC, integrated circuit; and/or
the storage medium of the personal health device has a storage capacity of 512 kB.

3. The method of claim 1 or 2, further comprising:
transmitting, particularly wirelessly, the compressed sensor data to an external device to enable data processing outside the personal health device;
wherein, optionally, the external device is an electronic user device, particularly a mobile phone, or a data processing device, particularly a server located in a computing cloud environment.

4. The method of any one of the preceding claims, wherein the encoder model is part of a task-specific machine-learning model related to a function performed by the personal health device;
wherein the task-specific model comprises at least one additional task-specific layer;
wherein the encoder model allows for simultaneous inference related to the function performed by the personal health device, such as oral location tracking, and compression in an on-the-fly fashion.

5. The method of any one of the preceding claims, wherein the encoder model has been compressed using one or more approaches comprising: quantization, pruning and/or knowledge distillation, particularly employing a student model to mimic the behaviour of a teacher model to a predetermined accuracy.

6. The method of any one of the preceding claims, wherein the encoder model is based at least in part on a convolutional neural network, CNN, particularly a U-Net, more particularly a one-dimensional U-Net; and/or
wherein the encoder model is based at least in part on a recurrent neural network, RNN, particularly a long short-term memory, LSTM, neural network.

7. The method of any one of the preceding claims, further comprising:
storing at least part of the sensor data as raw data on the personal health device in accordance with a predefined criterion such as a data amount, a usage time and/or a predefined number of usage sessions of the personal health device.

8. A method for decoding data from an electronic personal health device, such as an electronic toothbrush or an electronic shaver, on an external device such as an electronic user device, particularly a mobile phone, a data processing device and/or a server located in a computing cloud environment, comprising the following steps:
decoding compressed data, such as one or more latent vectors in a latent space, that has been obtained from a personal health device using a decoder model, in particular a symmetric decoder model.

9. The method of claim 8, further comprising:
obtaining compressed data to be decoded using the decoder model, preferably wirelessly, from the electronic personal health device, preferably via a data synchronization mechanism that is performed when a connection is established between the electronic personal health device and the external device, such as a pairing between the electronic personal health device and a mobile phone.

10. A method of training an encoder model for use in the method of any one of claims 1-7, comprising:
using a representation learning technique, particularly employing a recurrent neural network, RNN, more particularly a long short-term memory, LSTM, artificial neural network;
wherein, optionally, the representation learning technique is based at least in part on a reconstruction-based objective with a task-specific loss;
and, optionally, further comprising:
applying a quantization and/or pruning technique, during and/or after the using of the representation learning technique.

11. The method of claim 10, comprising a step of knowledge distillation, comprising the following substeps:
training a teacher encoder model using a representation learning technique, particularly employing an LSTM artificial neural network;
providing a student encoder model that is smaller than the teacher encoder model;
training the student encoder model to mimic the behaviour of the teacher encoder model, particularly up to a certain predetermined accuracy; and
supplying the trained student encoder model for use applications and/or for deploying the trained student encoder model on an electronic personal health device, such as an electronic toothbrush or an electronic shaver.

12. A data processing device, in particular an electronic personal health device such as an electronic toothbrush or an electronic shaver, or a controller for such a data processing device, comprising means for carrying out the method of any one of the preceding claims 1-7 or a data processing device, in particular a server computer, comprising means for carrying out the method of any one of the preceding claims 8-9 or 10-11.

13. A computer program, or a computer-readable medium storing a computer program, the computer program comprising instructions which, when the program is executed on a computer, cause the computer to carry out the method of any one of claims 1-7 or 8-9 or 10-11.

14. A machine-learning model data structure embodying an encoder model, configured for being used in the method of any one of claims 1-7 and trained using the method of any one of claims 10-11.

15. A data structure comprising compressed sensor data which has been compressed using the method of any one of claims 1-7.
